# EUROPÄISCHE PATENTSCHRIFT

(11) **EP 1 285 722 B1**
(45) Veröffentlichungstag und Bekanntmachung des Hinweises auf die Patenterteilung: **26.09.2007**
(21) Anmeldenummer: 02018454.5
(22) Anmeldetag: 16.08.2002
(51) Int. Cl.: B23Q 1/58, B23Q 1/48, B23Q 1/01, B23Q 1/26

(54) **Radialbohrmaschine**
Radial drilling machine
Perceuse radiale

(30) Priorität: 22.08.2001 DE 10148835
(43) Veröffentlichungstag der Anmeldung: 26.02.2003
(73) Patentinhaber: Mayer, Helmut K., 72766 Reutlingen (DE)
(72) Erfinder: Mayer, Helmut K., 72766 Reutlingen (DE)
(74) Vertreter: Munk, Ludwig

(56) Entgegenhaltungen:
- DE-A- 3 835 301
- US-A- 3 468 196

## Beschreibung

Die Erfindung betrifft eine Radialbohrmaschine, insbesondere Schnellradialbohrmaschine, mit einem einen Spindelkopf tragenden Ausleger und einer diesen aufnehmenden, mit stehender Achse angeordneten, verdrehsicher in Achsrichtung verschiebbar im Maschinengestell gelagerten Hubsäule, die mittels einer zugeordneten Antriebseinrichtung heb- und senkbar ist (siehe, z.B., US-3468196-A).

Bei bekannten Anordnungen dieser Art, wie bei der von der Anmelderin unter der Bezeichnung "Danuflex" in Verkehr gebrachten Schnellradialbohrmaschine, ist die Hubsäule als zylindrischer Körper ausgebildet, dessen Umfangsfläche als Gleitfläche ausgebildet ist. Das Maschinengestell ist mit die zylindrische Hubsäule umfassenden Gleitlagerringen versehen. Diese Maßnahmen ergeben eine Radialgleitlagerung der Hubsäule, bei der die Hubsäule selbst als Lagerorgan fungiert. Hierbei ergeben sich vergleichsweise große Lagerflächen, die nicht nur einen hohen Bearbeitungsaufwand und damit einen hohen Herstellungsaufwand ergeben, sondern auch eine laufende, aufwendige Schmierung und hohen Wartungsaufwand erfordern. Außerdem ergeben sich bei einer Gleitlagerung hier vorliegender Art hohe Losreißkräfte, was bei geregelten Antrieben ungünstig ist. Hinzu kommt, dass die in Gleitlagerringen gelagerte, zylindrische Hubsäule nicht nur in Achsrichtung verschiebbar, sondern auch in Umfangsrichtung verdrehbar ist, so dass eine zusätzliche Verdrehsicherung der Hubsäule erforderlich ist. Hierzu ist bei den bekannten Anordnungen an die zylindrische Hubsäule eine radial vorspringende Lasche angesetzt, die zwischen zwei seitliche, gestellseitig vorgesehene Anschläge eingreift. Hierdurch werden die oben bereits genannten Nachteile hinsichtlich Herstellungs- und Wartungsaufwand sowie hinsichtlich starker Losreißkräfte noch verschärft. Die bekannten Anordnungen erweisen sich demnach als nicht einfach, wartungsfreundlich und zuverlässig genug.

Hiervon ausgehend ist es daher die Aufgabe der vorliegenden Erfindung, eine Vorrichtung eingangs erwähnter Art unter Vermeidung der Nachteile der bekannten Anordnungen mit einfachen und kostengünstigen Mitteln so zu verbessern, dass eine vergleichsweise leichtgängige und wartungsfreundliche Bauweise erreicht wird.

Diese Aufgabe wird durch die Merkmale des Anspruchs 1 gelöst.

Diese Maßnahmen ergeben eine in Umfangsrichtung verdrehsichere Längsführung der Hubsäule, wobei die Hubsäule selbst kein Lagerorgan bildet und daher keine umfangsseitige Lauffläche benötigt. Die Hubsäule hat eine Rechteck-Querschnittsform. Ebenso kann eine zusätzliche Verdrehsicherung in Wegfall kommen. Die erfindungsgemäßen Maßnahmen führen daher zu einer einfachen und kostengünstigen Herstellung sowie zu einer verschleißarmen und wartungsfreundlichen Bauweise. Außerdem ergibt sich eine leichtgängige Beweglichkeit, was zu geringen Losbrechkräften führt und dementsprechend eine einfache und kostengünstige Dimensionierung der Antriebseinrichtung ermöglicht und eine Steuerung der Antriebseinrichtung erleichtert. Mit den erfindungsgemäßen Maßnahmen werden daher die eingangs geschilderten Nachteile des gattungsgemäßen Standes der Technik vollständig vermieden.

Die Hubsäule ist mit von ihrem Querschnitt abstehenden Vorsprüngen versehen, auf denen die Lagerorgane aufgenommen sind. Dies ermöglicht eine getrennte Herstellung der Hubsäule und der Lagerorgane und gewährleistet damit eine hohe Genauigkeit bei geringem Aufwand. Zwei bezüglich der Achse der Hubsäule einander gegenüberliegende Führungsschienen sind vorgesehen, denen paarweise angeordnete Lagerorgane zugeordnet sind, was eine ausgezeichnete Stabilität der Lagerung gewährleistet.

Eine weitere vorteilhafte Maßnahme kann darin bestehen, dass die Lagerorgane mit auf den Führungsschienen laufenden Wälzlagerkörpern versehen sind. Diese Maßnahme ergibt eine besonders hohe Leichtgängkeit sowie Verschleißarmut und Wartungsfreundlichkeit.

Weitere vorteilhafte Ausgestaltungen und zweckmäßige Fortbildungen der übergeordneten Maßnahmen sind in den restlichen Unteransprüchen angegeben und aus der nachstehenden Beispielsbeschreibung anhand der Zeichnung näher entnehmbar.

In der nachstehend beschriebenen Zeichnung zeigen:
- Figur 1: eine Seitenansicht einer Schnellradialbohrmaschine,
- Figur 2: einen Schnitt entlang der Linie II/II in Figur 1 und
- Figur 3: einen Schnitt entlang der Linie III/III in Figur 2.

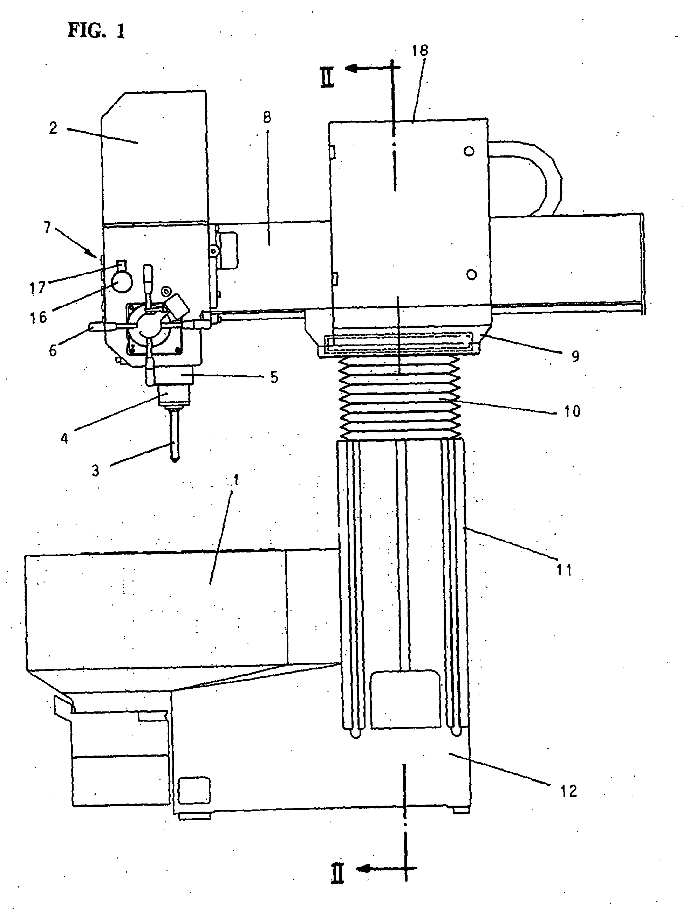

Die der Figur 1 zugrundeliegende Schnellradialbohrmaschine enthält einen oberhalb eines Werkstückauflagetisches 1 angeordneten Spindelkopf 2, der eine am unteren Ende mit einem Spannfutter zur Aufnahme eines hier als Bohrer ausgebildeten Werkzeugs 3 versehene, antreibbare Spindel 4 enthält. Die Spindel 4 ist in einer in vertikaler Richtung verschiebbar im Spindelkopf 2 angeordneten Pinole 5 aufgenommen, die mittels eines Handkreuzes 6 bewegbar, das heißt ausund einfahrbar ist. Im Bereich der Frontseite des Spindelkopfes 2 ist ein Bedienungspult 7 vorgesehen, an dem diverse Geschwindigkeiten und Positionen einstellbar und die entsprechenden Antriebe aktivierbar bzw. passivierbar sind.

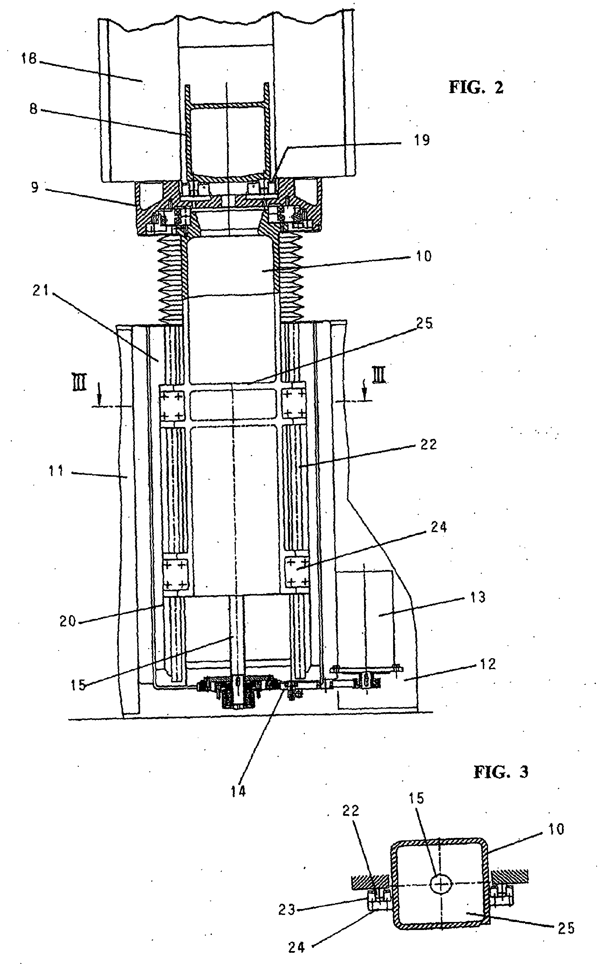

Der Spindelkopf 2 ist am vorderen Ende eines Auslegers 8 angebracht, der in Längsrichtung verschiebbar auf einem Kreuzkopf 9 gelagert ist, der seinerseits drehbar auf einer mit stehender Achse angeordneten Hubsäule 10 aufgenommen ist. Die Hubsäule 10 ist in Achsrichtung verstellbar in einem hinterhalb des Werkstückauflagetisches 1 angeordneten Ständer 11 des den Werkstückauflagetisch 1 tragenden Maschinengestells 12 gelagert und mittels einer zugeordneten Antriebseinrichtung heb- und senkbar, die, wie aus Figur 2 ersichtlich ist, einen mittels eines neben dem Ständer 11 angeordneten Motors 13 über einen Zahnriemen 14 antreibbaren Spindeltrieb 15 aufweist.

Nach der Einstellung der gewünschten Höhe des Spindelkopfes 2 wird die Bohrposition durch Verfahren und Schwenken des Auslegers 8 angefahren. Hierzu ist der Spindelkopf 2 auf der dem Handkreuz 6 gegenüberliegenden Seite mit einem Führungsgriff 16 versehen. Nach Erreichen der gewünschten Bohrposition erfolgt eine Blockierung. Hierzu ist eine geeignete Blockiereinrichtung vorgesehen, die mittels eines im Bereich des Führungsgriffs 16 angeordneten Betätigungsknopfes 17 betätigbar ist. Die den diversen Antriebseinrichtungen zugeordneten Steuereinrichtungen sind in einem auf dem Kreuzkopf 9 aufgenommenen Schaltschrank 18 untergebracht, der zweckmäßig, wie aus Figur 2 entnehmbar ist, als vom Ausleger 8 durchgriffener Tunnel ausgebildet sein kann. Zur verschiebbaren Lagerung des Auslegers 8 auf dem Kreuzkopf 9 sind Längsführungen 19 vorgesehen, die an der Unterseite des Auslegers 8 angebrachte Führungsschienen und hiermit zusammenwirkende, auf dem Kreuzkopf 9 angebrachte, zweckmäßig mit einem Kugelumlaufmagazin versehene Schlitten enthalten.

Die Hubsäule 10 ist, wie die Figuren 2 und 3 erkennen lassen, als an ihrem oberen Ende mit einem den Kreuzkopf 9 aufnehmenden Kragen versehener, im dargestellten Beispiel rechteckförmiger Hohlkörper ausgebildet, der durch zugeordnete Längsführungen 20 in vertikaler, das heißt in Richtung seiner Achse, verschiebbar im zugeordneten Ständer 11 des Maschinengestells 12 gelagert ist. Die Längsführungen 20 umfassen zwei an der Innenseite eines der Hubsäule 10 zugeordneten Schachts 21 des Ständers 11 angebrachte, vertikal, das heißt in Richtung der Achse der Hubsäule 10 verlaufende Führungsschienen 22 und mit diesen im Eingriff stehende, an der Hubsäule 10 befestigte Lagerorgane 23. Zur Aufnahme der Lagerorgane 23 ist die Hubsäule 10 mit seitlich abstehenden, einander gegenüberliegenden Vorsprüngen 24 versehen. Jeder Führungsschiene 22 sind zwei in Hubrichtung gegeneinander versetzte Lagerorgane 23 zugeordnet. Die Hubsäule 10 ist dementsprechend auf den betreffenden, einander gegenüberliegenden Seiten mit jeweils zwei in Hubrichtung gegeneinander versetzten Vorsprüngen 24 versehen. Diese bilden praktisch ohrenartige Konsolen, an denen das jeweils zugeordnete Lagerorgan 23 durch Schrauben etc. festlegbar ist, was eine exakte Einstellung ermöglicht.

Die Lagerorgane 23 sind als mit Kugelumlaufmagazinen versehene Schlitten ausgebildet. Hierdurch ergibt sich eine Wälzlagerung mit auf den Führungsschienen 22 laufenden Wälzlagerkörpern, was eine hohe Leichtgängigkeit sowie hohe Wartungsfreundlichkeit und Verschleißarmut ergibt.

Die Hubsäule 10 besitzt einen rechteckförmigen Querschnitt, so dass sich jeweils zwei parallele Seitenflanken ergeben, an denen die seitlich abstehenden Vorsprünge 24 angebracht sind. Im dargestellten Beispiel liegt der Hubsäule 10 ein Gußformling zugrunde, wobei die seitlichen Vorsprünge 24 angeformt sind. Die Verwendung eines Gußformling erweist sich als sehr kostengünstig, da eine Bearbeitung nur im Bereich des dem Kreuzkopf 9 zugeordneten Kragens und im Bereich der Anlageflächen der seitlichen Vorsprünge 24 erforderlich ist. Anstelle einer gegossenen Hubsäule könnte selbstverständlich auch eine geschweißte oder gebaute Anordnung vorgesehen sein. Die Hubsäule 10 kann auf einfache Weise auch mit Querrippen 25 zur Abstützung eines der Hubsäule 10 zugeordneten Elements des Spindeltriebs 15 versehen sein.

Mit Hilfe der vorstehend erwähnten, von der Kreisform abweichenden, rechteckförmigen Querschnittsform lassen sich bezüglich einer Hauptbelastungsrichtung ein gegenüber einer kreisförmigen Querschnittsform höheres Flächenträgheitsmoment und damit eine höhere Biegestabiltät erreichen. Die seitlichen Vorsprünge 24 sind zweckmäßig im Bereich der in der Hauptbelastungsrichtung verlaufenden Seitenflanken angebracht.

## Patentansprüche

1. Radialbohrmaschine, insbesondere Schnellradialbohrmaschine, mit einem einen Spindelkopf (2) tragenden Ausleger (8) und einer diesen aufnehmenden, mit stehender Achse angeordneten, verdrehsicher in Achsrichtung verschiebbar im Maschinen-gestell gelagerten, einen Rechteckquerschnitt aufweisenden Hubsäule (10), die mittels einer zugeordneten Antriebseinrichtung heb- und senkbar ist, **dadurch gekennzeichnet, dass** die Hubsäule (10) im Bereich ihrer, einander gegenüberliegenden, in der Hauptbelastungsrichtung verlaufenden Seitenflanken jeweils zwei in Hubrichtung gegeneinander versetzte, vom Querschnitt der Hubsäule (10) ab stehende Vorsprünge (24) aufweist, an denen jeweils ein Lagerorgan (23) ein stellbar angebracht ist, und dass das Maschinengestell (12) mit zwei bezüglich der Achse der Hubsäule (10) einander gegenüberliegenden Führungsschienen (22) versehen ist, auf denen jeweils zwei in Achsrichtung gegeneinander versetzte Lagerorgane (23) nur in Achsrichtung verschiebbar aufgenommen sind.

2. Radialbohrmaschine nach Anspruch 1, **dadurch gekennzeichnet, dass** die Lagerorgane (23) mit auf den Führungsschienen (22) laufenden Wälzlagerkörpern versehen sind.

3. Radialbohrmaschine nach einem der vorhergehenden Ansprüche, **dadurch gekennzeichnet, dass** der Querschnitt der Hubsäule (10) in der Hauptbelastungsrichtung ein größeres Flächenträgheitsmoment aufweist, als quer dazu.

## Claims

1. A radial drilling machine, in particular a high-speed radial drilling machine, comprising a cantilever (8) holding a spindle head (2), and a lifting column (10) accommodating the latter, having a vertical axis and, while secured against rotary movement, being movable in the direction of its axis and held in the machine frame, and having a rectangular cross-section, which lifting column (10) can be raised and lowered by means of an associated drive unit, **characterised in that** the lifting column (10) in the region of its side flanks lying opposite each other and extending in the direction of major loads, comprises two projections (24) which are mutually offset in the direction of the lifting movement and stand out from the cross-section of the lifting column (10), with a bearing element (23) being adjustably mounted on each of such projections, and further **in that** the machine frame (12) is provided with two guide rails (22) arranged opposite each other with respect to the axis of the lifting column (10), each of such guide rails (22) accommodating two bearing elements (23) which are mutually offset relative to each other in the direction of the axis and which are movable in an axial direction only.

2. A radial drilling machine in accordance with Claim 1, **characterised in that** the bearing elements (23) are provided with rolling bearing elements running on the guide rails (22).

3. A radial drilling machine in accordance with any of the preceding claims, **characterised in that** the cross-section of the lifting column (10) has a higher geometrical moment of inertia in the direction where major loads occur than in the direction transverse thereto.

## Revendications

1. Perceuse radiale, en particulier perceuse radiale à grande vitesse, avec un avant-bras (8) supportant une tête de broche (2) et avec une colonne de montée et descente (10) présentant une section rectangulaire qui reçoit ledit avant-bras, est disposée à axe débout et est logée dans le bâti de machine de manière à être sécurisée contre une rotation et à être déplaçable dans la direction axiale, ladite colonne de montée et descente pouvant être levée et abaissée par le biais d'un dispositif d'entraînement associé, **caractérisée par le fait que** ladite colonne de montée et descente (10) présente dans la zone de ses flancs latéraux situés en vis-à-vis et s'étendant dans la direction principale de charge respectivement deux projections (24) qui sont décalées l'une par rapport à l'autre dans la direction de montée et descente et font saillie de la section de la colonne de montée et descente (10) et sur lesquelles est monté respectivement un organe de logement (23) de manière à pouvoir être réglé, et que le bâti de machine (12) est pourvu de deux glissières (22) qui sont situées en vis-à-vis par rapport à l'axe de la colonne de montée et descente (10) et sur lesquelles sont reçus respectivement deux organes de logement (23) décalés l'un par rapport à l'autre dans la direction axiale, de manière à ce qu'ils ne soient déplaçables que dans le sens axial.

2. Perceuse radiale selon la revendication 1, **caractérisée par le fait que** lesdits organes de logement (23) sont munis de corps de roulement se déplaçant sur lesdites glissières (22).

3. Perceuse radiale selon l'une des revendications précédentes, **caractérisée par le fait que** la section de la colonne de montée et descente (10) présente un moment d inertie de surface qui est plus grand dans la direction principale de charge que transversalement à celle-ci.
